# EUROPÄISCHE PATENTSCHRIFT

(11) **EP 4 019 312 B1**
(45) Veröffentlichungstag und Bekanntmachung des Hinweises auf die Patenterteilung: **27.09.2023**
(21) Anmeldenummer: 21215286.2
(22) Anmeldetag: 16.12.2021
(51) Int. Cl.: B60K 15/05, B62D 25/24

(54) **ABDECKVORRICHTUNG, INSBESONDERE LADEKLAPPENVORRICHTUNG, MIT EINER DECKELKOMPONENTE ZUM VERSCHLIESSEN UND FREIGEBEN EINER ÖFFNUNG IN EINER FAHRZEUGKAROSSERIE**
COVERING DEVICE, IN PARTICULAR A LOADING FLAP DEVICE, WITH A COVER COMPONENT FOR CLOSING AND RELEASING AN OPENING IN A VEHICLE BODY
DISPOSITIF DE RECOUVREMENT, EN PARTICULIER DISPOSITIF FORMANT VOLET DE CHARGEMENT, DOTÉ D'UN COMPOSANT COUVERCLE PERMETTANT DE FERMER ET D'OUVRIR UNE OUVERTURE DANS UNE CARROSSERIE DE VÉHICULE

(30) Priorität: 18.12.2020 DE 102020134314; 04.05.2021 DE 102021111573
(43) Veröffentlichungstag der Anmeldung: 29.06.2022
(73) Patentinhaber: Valmet Automotive Oy, 23500 Uusikaupunki (FI)
(72) Erfinder: Kreiling, Nils, 49080 Osnabrück (DE); Hämmerling, Nils, 49080 Osnabrück (DE)
(74) Vertreter: Kronthaler, Schmidt & Coll.

(56) Entgegenhaltungen:
- DE-A1- 19 935 454
- DE-A1-102015 206 715
- US-A1- 2011 140 477

## Beschreibung

Die Erfindung betrifft eine Abdeckvorrichtung, insbesondere eine Ladeklappenvorrichtung, mit einer Deckelkomponente und einem Verlagerungsmechanismus für die Deckelkomponente zum Verschließen und Freigeben einer Öffnung in einer Fahrzeugkarosserie nach der im Oberbegriff des Anspruches 1 näher definierten Art.

Aus der DE 10 2017 212 397 A1 ist eine Verlagerungsmechanik für ein bewegliches Karosserieteil zum Abdecken eines Tank- und/oder eines Lademuldenbereiches eines Kraftfahrzeuges bekannt. Das bewegliche Karosserieteil stellt eine Klappe dar, die in eine den Lademuldenbereich vollständig freigebenden Position gegenüber einem feststehenden Karosseriebereich absenkbar und unter den feststehenden Karosseriebereich verlagerbar ist. An einem Steuerschlitten, der entlang einer fahrzeugfesten Führungsbahn linear beweglich verlagerbar ist, ist wenigstens eine erste Steuerbahn ausgebildet. Wenigstens ein erstes Steuerelement, das mit der Klappe koppelbar ist, steht in einer Wirkverbindung mit der ersten Steuerbahn des Steuerschlittens und einer fahrzeugfesten Verlagerungsbahn.

Die fahrzeugfeste Führungsbahn, die erste Steuerbahn und die Verlagerungsbahn sind derart gestaltet, dass mittels einer Verlagerung des Steuerschlittens entlang der Führungsbahn eine Absenkbewegung des ersten Steuerelementes gegenüber dem Steuerschlitten und entlang der ersten Kulissenbahn sowie eine Verlagerungsbewegung des ersten Kulissenbolzens entlang der Verlagerungsbahn und somit eine Absenkbewegung der Klappe und eine Verlagerungsbewegung unter den feststehenden Karosseriebereich bewirkbar ist. Der Steuerschlitten weist ein erstes Gleitelement und ein zweites Gleitelement auf, mittels derer der Steuerschlitten entlang der fahrzeugfesten Führungsbahn gleitend linear beweglich verlagerbar ist.

Die bekannte Verlagerungsmechanik ist aufgrund einer hohen Bauteilanzahl durch hohe Fertigungskosten und einen unerwünscht hohen Montageaufwand gekennzeichnet.

Eine Ladeklappeneinheit zum Verschließen einer Ladeöffnung mit einer Ladeklappe ist auch in der DE 10 2017 101 247 A1 beschrieben. Die Ladeklappe ist in einer Freigabeposition in einem innenliegenden Bereich unterhalb einer Außenfläche einer Fahrzeugkarosserie angeordnet. Die Ladeklappeneinheit umfasst auch eine Antriebseinheit, die über ein Trägerelement mit der Ladeklappe verbunden ist. Die Antriebseinheit ist dazu ausgeführt, das Trägerelement mit der Ladeklappe zwischen einer Schließposition und einer Freigabeposition zu bewegen.

Die DE 44 40 814 A1 offenbart eine Tankklappe, die von einer Schließstellung in eine unterhalb der Fahrzeugkarosserie verbrachte Offenstellung überführbar ist. Hierzu sind an der Tankklappe angeordnete Führungselemente mit Führungsbolzen vorgesehen, die jeweils in einer Führungsbahn mit einem geraden und mit einem gekrümmten Führungsabschnitt aufgenommen sind. Der gekrümmte Führungsabschnitt sorgt für eine Hubbewegung, während der gerade Führungsabschnitt eine Verschiebebewegung bewirkt. Die Verstellbewegung wird beispielsweise über eine Stange, welche mit einem Übertragungsteil gekoppelt ist, und über einen zwischen dem Übertragungsteil und dem Führungselement angeordneten Koppelhebel auf die Tankklappe übertragen.

Die Verlagerungsmechanik ist aufgrund der linearen Verstellbewegung der Stange durch einen unerwünscht hohen Bauraumbedarf gekennzeichnet.

Die US 2011/0140477 A1 offenbart eine Tankdeckelvorrichtung mit einem Deckel und einem Gelenkmechanismus für den Deckel zum Verschließen und Freigeben einer Öffnung in einer Fahrzeugkarosserie, wobei der Deckel mittels einer Zahnstangenführung in einen Innenraum innerhalb der Fahrzeugkarosserie verlagerbar ist.

Die DE 10 2015 206 715 A1 zeigt eine Abdeckvorrichtung mit einer Ladeklappe und einem Verlagerungsmechanismus mit Führungsschienen und einer Zahnstange für die Ladeklappe zum Verschließen und Freigeben einer Lademuldenöffnung in einer Außenhaut eines Fahrzeugs. Die Ladeklappe ist dabei in einen Bereich unter der Außenhaut verlagerbar, wozu Führungsschienen 5 vorgesehen sind, in der die Ladeklappe zwischen einer die Lademuldenöffnung verschließenden und freigebenden Stellung geführt ist. Der Antrieb erfolgt dabei mittels eines Elektromotors und einer Zahnstange, die an einem Ende mit dem Elektromotor verbunden ist und an ihrem anderen Ende gelenkig mit der Ladeklappe verbunden ist.

Aus der Praxis bekannte und bauraumgünstiger ausgeführte Verlagerungsmechanismen für Tankklappen und dergleichen nutzen oftmals sogenannte Steigekabel, um die Tankklappen zwischen ihrem die Tanköffnung verschließenden Betriebszustand und ihrem die Tankmulde freigebenden Betriebszustand zu verlagern.

Bei diesen Lösungen ist es jedoch problematisch, wenn sich die Verlagerungsmechanik mit den Steigekabeln auch im Nassbereich eines Fahrzeuges befindet. Dann ist ein unerwünscht hoher Dichtaufwand erforderlich, um ein Verschmutzen und/oder Vereisen der Steigekabel zu vermeiden. Zusätzlich werden Steigekabel beflockt, um Betriebsgeräusche zu reduzieren, die eine Qualitätsanmutung beeinträchtigen. Beflockte Steigekabel erfordern jedoch erhöhte Kräfte und Drehmomente, um die Steigekabel gegenüber gehäusefesten Führungen zu verschieben.

Der vorliegenden Erfindung liegt die Aufgabe zugrunde, eine bauraum- und kostengünstige Abdeckvorrichtung, insbesondere eine Ladeklappenvorrichtung, mit einer Deckelkomponente und einem Verlagerungsmechanismus für die Deckelkomponente zum Verschließen und Freigeben einer Öffnung in einer Fahrzeugkarosserie zur Verfügung zu stellen, die mit geringen Betätigungskräften und Antriebsmomenten sowie mit geringen Betriebsgeräuschen betreibbar ist und gegenüber Umwelteinflüssen widerstandsfähig ist.

Erfindungsgemäß wird diese Aufgabe mit einer Abdeckvorrichtung mit den Merkmalen des Anspruches 1 gelöst.

Die erfindungsgemäße Abdeckvorrichtung umfasst eine Deckelkomponente zum Verschließen und Freigeben einer Öffnung in einer Fahrzeugkarosserie, wobei die Öffnung ein Durchgang einer Fahrzeugkarosserie in eine innerhalb der Fahrzeugkarosserie ausgebildeten Lade- oder Tankmulde sein kann. Dabei kann die Deckelkomponente beispielsweise als Ladeklappe für Fahrzeuge mit einem elektrischen Antrieb oder als eine Tankklappe für Fahrzeuge mit einer Brennkraftmaschine ausgeführt sein. Des Weiteren kann die Deckelkomponente auch jegliche andere Öffnung an der Karosserie, wie z. B. Durchtrittsöffnungen für ein Verdeckgestänge eines Cabriolets oder Dachöffnungen, verschließen und öffnen.

Die erfindungsgemäße Abdeckvorrichtung verfügt über einen Verlagerungsmechanismus für die Deckelkomponente zum Verschließen und Freigeben der Öffnung in der Fahrzeugkarosserie, wobei die Deckelkomponente unter einen angrenzenden Bereich der Fahrzeugkarosserie absenkbar ist. Teil des Verlagerungsmechanismus ist ein Kulissenführungssystem, über das die Deckelkomponente zwischen einer die Öffnung verschließenden Stellung und einer die Öffnung freigebenden Stellung verstellbar geführt ist.

Erfindungsgemäß ist zumindest ein um einen - vorzugsweise stationären - Drehpunkt bzw. um eine vorzugsweise stationäre Drehachse verschwenkbares erstes Steuerelement vorgesehen, das in einem vom Drehpunkt bzw. von der Drehachse beabstandeten Koppelbereich mit der Deckelkomponente in Wirkverbindung steht. Die Deckelkomponente wird während einer Verschwenkung des ersten Steuerelements in Richtung einer Position, die der öffnungsfreigebenden Stellung der Deckelkomponente entspricht, und während einer Verschwenkung des Steuerelements in Richtung einer Position, die der verschließenden Stellung der Deckelkomponente entspricht, entsprechend verstellt.

Die erfindungsgemäße Abdeckvorrichtung ist konstruktiv einfach sowie mit einer geringen Bauteilanzahl ausgeführt und weist einen geringen Bauraumbedarf auf. Zusätzlich ist die Deckelkomponente der erfindungsgemäßen Vorrichtung im Vergleich zu Lösungen, bei denen der Antrieb der Deckelkomponenten über Steigekabel erfolgt, über das Steuerelement mit geringeren Antriebskräften und Antriebsmomenten bei gleichzeitig geringen Betriebsgeräuschen verstellbar.

Weiterhin vorteilhaft ist, dass die Verlagerungsmechanik mit dem verschwenkbaren Steuerelement ohne aufwendige Dichtmaßnahmen auch im Nassbereich eines Fahrzeuges eingesetzt werden kann.

Das Kulissenführungssystem weist zweckmäßigerweise Steuerbahnen auf, die dazu eingerichtet sind, die Deckelkomponente während einer Schwenkbewegung des schwenkbaren Steuerelements in definiertem Umfang zu verstellen. So besteht die Möglichkeit, dass die Deckelkomponente während einer Schwenkbewegung des Steuerelements ausgehend von einer ersten Schwenkstellung, die das erste Steuerelement im verschließenden Betriebszustand der Deckelkomponente aufweist, in Richtung einer zweiten Schwenkstellung, die das erste Steuerelement im öffnungsfreigebenden Betriebszustand der Deckelkomponente aufweist, zuerst im Wesentlichen vertikal bzw. normal aus einer Anlageposition an den angrenzenden Bereich der Fahrzeugkarosserie in Form einer Hubbewegung hiervon weg in Richtung des Fahrzeuginneren verstellt wird. Anschließend an diese Absenkbewegung kann die Deckelkomponente im Wesentlichen unter den angrenzenden Bereich der Fahrzeugkarosserie in einem die Öffnung freigebenden Umfang weiter verfahren werden.

Letztgenannte Verstellung der Deckelkomponente innerhalb der Fahrzeugkarosserie kann beispielsweise in Fahrzeughochrichtung nach oben, nach unten, in Fahrzeuglängsrichtung nach vorne oder nach hinten oder auch in Fahrzeughochrichtung und in Fahrzeuglängsrichtung erfolgen.

Bei einer Ausführungsform der Abdeckvorrichtung, die durch eine geringe Bauteilanzahl gekennzeichnet ist, sind erste Steuerbahnen des Kulissenführungssystems in dem schwenkbaren Steuerelement vorzugsweise in Form langlochartiger Lochbahnen vorgesehen. Weitere Steuerbahnen sind vorzugsweise ebenfalls als langlochartige Lochbahnen karosseriefest ausgebildet. Folglich werden die ersten Steuerbahnen gemeinsam mit dem Steuerelement verstellt, während die weiteren Steuerbahnen ortsfest bleiben.

Die Deckelkomponente kann auf konstruktiv einfache Art und Weise mit fest an der Deckelkomponente angeordneten Gleitelementen in die Steuerbahnen eingreifen. Hierbei kann die Deckelkomponente an einer dem jeweiligen Steuerelement zugewandten Seite mit z. B. zwei fest hieran angeordneten Gleitelementen ausgebildet sein, die bei einer Schwenkbewegung des Steuerelements in den Steuerbahnen bewegt werden. Bei einem wenigstens annähernd rechteckig mit entsprechend gerundeten Ecken ausgeführten Deckel können die Gleitelemente zweckmäßig in gegenüberliegenden Eckbereichen einer jeweils dem Steuerelement zugewandten Seite des Deckels bzw. der Deckelkomponente angeordnet sein.

Damit bei einer Verschwenkung des Steuerelements von seiner ersten Schwenkstellung in Richtung seiner zweiten Schwenkstellung zunächst die Absenkbewegung bzw. normale Hubbewegung der Deckelkomponente erfolgt, können jeweils Verläufe der ersten Steuerbahnen im Steuerelement und Verläufe von Abschnitten der weiteren Steuerbahnen winkelig zueinander verlaufend vorgesehen sein.

Die betreffenden Abschnitte der weiteren Steuerbahnen erstrecken sich bei einer konstruktiv einfachen Ausführungsform im Wesentlichen in Richtung der Hubbewegung der Deckelkomponente von der Öffnung bzw. der Karosserieoberfläche weg.

An diese Abschnitte der weiteren Steuerbahnen schließen sich bei einer Weiterbildung der erfindungsgemäßen Abdeckvorrichtung jeweils weitere Abschnitte an, deren Verläufe jeweils winkelig zu den Verläufen der ersten Abschnitte der weiteren Steuerbahnen verlaufend ausgerichtet sein können. Die Ausrichtung ist dabei so, dass aus einer fortgesetzten Schwenkbewegung des Steuerelements die Stellbewegung bzw. Schwenkbewegung der Deckelkomponente unter den angrenzenden Bereich der Fahrzeugkarosserie resultiert.

Diese weiteren Abschnitte der weiteren Steuerbahnen können kreisbogenförmig ausgeführt sein und jeweils Kreislinien von Kreisen folgen, deren Mittelpunkte auf der Drehachse des Steuerelementes liegen.

Das schwenkbare Steuerelement kann bei einer konstruktiv einfachen Weiterbildung der erfindungsgemäßen Abdeckvorrichtung als Steuerplatte ausgeführt sein.

Solch eine schwenkbare Steuerplatte kann beispielsweise bei einer annähernd rechteckigen Deckelkomponenten mit zwei seitlichen Gleitelementen annähernd trapezförmig sein, wobei in Schließstellung betrachtet entlang einer annähernd parallel zur Fahrzeugaußenhaut verlaufenden Kante eine annähernd geradlinig verlaufende Steuerbahn und an einer hieran angrenzenden, annähernd senkrecht zur Fahrzeugaußenhaut verlaufenden Kante eine zweite Steuerbahn verlaufen kann und sich die Gleitelemente an den Ecken des annähernd parallel zur Fahrzeugaußenhaut verlaufenden Kantenbereichs befinden.

Die weiteren, karosseriefesten Steuerbahnen können in Schließstellung betrachtet einen für die Absenkbewegung dienenden geraden Abschnitt aufweisen, der im Wesentlichen senkrecht zur Fahrzeugaußenhaut verläuft, woran sich ein Teilkreisabschnitt zur Verlagerung der Deckelkomponente unter den angrenzenden Karosseriebereich anschließt, der sich in Drehrichtung des schwenkbaren Steuerelements erstreckt.

Eine Antriebsachse des Antriebs der Deckelkomponente um die Drehachse und die Drehachse können normal auf der derselben Kinematikebene des Steuerelementes stehen. Dann ist die erfindungsgemäße Abdeckvorrichtung mit geringem Bauraumbedarf und einer geringen Bauteilanzahl ausführbar.

Die Gleitelemente können als zylindrische Bolzen ausgeführt sein, deren Längsachsen parallel zur Drehachse des Steuerelementes verlaufen und die mit ihren freien Enden die ersten Steuerbahnen oder die zweiten Steuerbahnen durchgreifen und in die zweiten Steuerbahnen oder in die ersten Steuerbahnen zumindest eingreifen. Die Deckelkomponente ist somit auf konstruktiv einfache Art und Weise mit gleichzeitig geringen Stellkräften verstellbar, da Anlagebereiche zwischen den Außenseiten der zylindrischen Bolzen und den Steuerbahnen nahezu linienförmig sind.

Die zweiten Steuerbahnen können auf der Seite des Steuerelementes vorgesehen sein, die der Deckelkomponente abgewandt oder die der Deckelkomponente zugewandt ist.

Die Verschwenkung des ersten Steuerelements kann bauraumsparend in einer Ebene erfolgen, welche im Wesentlichen parallel zur Oberfläche des angrenzenden Bereichs der Fahrzeugkarosserie liegt.

Das erste Steuerelement kann in einer weiteren Ausführung in seinem Koppelbereich gelenkig mit einem weiteren Steuerelement verbunden sein, das gelenkig mit der Kulissenführung in Verbindung steht. Das erste Steuerelement und das damit gelenkig wirkverbundene weitere Steuerelement bilden dann einen sogenannten Zweischlag, der Teil eines besonders bauraumgünstigen sowie gegen Umwelteinflüsse widerstandsfähigen Antriebs ist.

Bei einer einfachen Ausführung können die Steuerelemente als Steuerhebel ausgeführt sein, jedoch sind auch andere geometrische Ausgestaltungen mit gleicher Funktionalität, z.B. die Ausbildung eines der Steuerelemente als runde Scheibe, denkbar.

Alternativ zur Verwendung des weiteren Steuerelements kann das erste Steuerelement mit seinem Koppelbereich längsverschieblich in ein Langloch der Kulissenführung eingreifen. Der Koppelbereich des ersten Steuerelements wird dann während einer Schwenkbewegung des Steuerelements im Langloch in Längsrichtung des Langlochs verstellt. Diese Ausführungsform der erfindungsgemäßen Abdeckvorrichtung ist durch einen geringen Bauraumbedarf und eine hohe Robustheit gekennzeichnet.

Die Kulissenführung kann Steuerbahnen aufweisen, die dazu eingerichtet sind, die Deckelkomponente während einer Schwenkbewegung des ersten Steuerelements in definiertem Umfang zu verstellen. So besteht die Möglichkeit, dass die Deckelkomponente während einer Schwenkbewegung des ersten Steuerelements ausgehend von einer ersten Schwenkstellung, die das erste Steuerelement im verschließenden Betriebszustand der Deckelkomponente aufweist, in Richtung einer zweiten Schwenkstellung, die das erste Steuerelement im öffnungsfreigebenden Betriebszustand der Deckelkomponente aufweist, zuerst im Wesentlichen vertikal aus einer Anlageposition an den angrenzenden Bereich der Fahrzeugkarosserie in Form einer Hubbewegung hiervon weg in Richtung des Fahrzeuginneren verstellt wird. Daran anschließend kann die Deckelkomponente im Wesentlichen unter den angrenzenden Bereich der Fahrzeugkarosserie in einem die Öffnung freigebenden Umfang weiter verfahren werden.

Letztgenannte Verstellung der Deckelkomponente innerhalb der Fahrzeugkarosserie kann beispielsweise in Fahrzeughochrichtung nach oben, nach unten, in Fahrzeuglängsrichtung nach vorne oder nach hinten oder auch in Fahrzeughochrichtung und in Fahrzeuglängsrichtung erfolgen.

Erste Steuerbahnen der Kulissenführung können jeweils in Schlittenelementen bzw. in Gleitkörpern vorgesehen sein, die entlang von karosseriefesten zweiten Steuerbahnen verstellt werden und mit dem ersten Steuerelement in Wirkverbindung stehen. Dann ist die Hubbewegung und die zusätzliche seitliche Stellbewegung auf konstruktiv einfache Art und Weise bei gleichzeitig geringer Klemmneigung im Bereich der Kulissenführung umsetzbar.

Bei einer mit geringem Aufwand montierbaren und konstruktiv einfachen Ausführungsform der erfindungsgemäßen Vorrichtung greift die Deckelkomponente mit beispielsweise bolzenartigen Gleitelementen gleichzeitig in die ersten Steuerbahnen und in die zweiten Steuerbahnen ein. Dabei bewirkt die Schwenkbewegung des ersten Steuerelements über die Zwangsführung der Gleitelemente in den Schlittenelementen und die Zwangsführung der Schlittenelemente in zugeordneten Kulissenschienen mit geringem Aufwand eine Verstellung der Deckelkomponente.

Für die Umsetzung der Hubbewegung und der Stellbewegung der Deckelkomponente können jeweils ein Verlauf eines Abschnittes der ersten Steuerbahnen in den Schlittenelementen und Verläufe von Abschnitten der zweiten, karosseriefesten Steuerbahnen winkelig zueinander verlaufen. Dann resultiert aus der Schwenkbewegung des ersten Steuerelements ausgehend von seiner ersten Schwenkstellung in Richtung seiner zweiten Schwenkstellung und der damit in Zusammenhang stehenden Stellbewegung der Schlittenelemente zunächst die vertikale Stellbewegung bzw. die Hubbewegung der Deckelkomponente.

Die fahrzeugfesten zweiten Steuerbahnen können erste Abschnitte und abgewinkelte, beispielsweise orthogonal verlaufende zweite Abschnitte aufweisen. Dann resultiert auf einfache Art und Weise aus einer Schwenkbewegung des ersten Steuerelements in Richtung seiner zweiten Schwenkstellung und der damit in Zusammenhang stehenden Stellbewegung der Schlittenelemente die Stellbewegung der Deckelkomponente innerhalb der Fahrzeugkarosserie, über die die Öffnung letztendlich freigegeben wird.

Die fahrzeugfesten zweiten Steuerbahnen können jeweils in einer Seitenfläche von Kulissenschienen in Form von Hohlprofilen vorgesehen sein, in deren Innenräumen die Schlittenelemente verschieblich angeordnet sind. Dabei können die Schlittenelemente mit ihren Außenseiten an Innenseiten der Kulissenschienen entlanggleiten.

Zusätzlich können die Abschnitte der ersten Steuerbahnen jeweils endseitig mit Rastbereichen für die Gleitelemente ausgeführt sein. Dabei besteht die Möglichkeit, dass die Rastbereiche dazu eingerichtet sind, einem Eintreten der Gleitelement in Abschnitte der ersten Steuerbahnen entgegen zu wirken, die jeweils zwischen den Rastbereichen verlaufen. Dabei kann die Wirkung der Rastbereiche solange bestehen, solange die Gleitelement in den Rastbereichen angeordnet sind und solange eine Schwenkbewegung des Steuerelements unterbleibt, die die Gleitelement aus den Rastbereichen in die Abschnitte der ersten Steuerbahnen überführt.

Die je nach Einbaulage oberen und unteren Schlittenelemente, welche in vorzugsweise parallelen Kulissenschienen mit den fahrzeugfesten zweiten Führungsbahnen laufen, können über wenigstens ein Bügelelement miteinander verbunden sein, wobei das Bügelelement mit dem ersten Steuerelement bzw. Steuerhebel in Wirkverbindung steht. Diese Wirkverbindung kann z. B. über eine Drehverbindung des Bügels mit dem weiteren Steuerhebel, der einen Zweischlag mit dem ersten Steuerhebel bildet, hergestellt werden.

Durch solche ein Bügelelement kann mit geringer Bauteilanzahl eine Lösung bereitgestellt werden, bei der das Risiko, dass die Verstellung der Deckelkomponente durch Klemmkräfte im Bereich der Kulissenführung verhindert wird, minimiert ist.

Ein einfacher und robuster Antrieb des ersten Steuerelement kann vorsehen, dass dieses mit einem Zahnsegment oder mit einem Zahnrad drehfest verbunden ist, welches von einem Zahnradgetriebe angetrieben wird.

Ein erfindungsgemäß ausgeführtes Fahrzeug ist mit einer vorstehend näher beschriebenen Abdeckvorrichtung ausgeführt, um eine Öffnung der Fahrzeugkarosserie auf konstruktiv einfache und kostengünstige Art und Weise verschließen und freigeben zu können.

Die vertikale Hubbewegung der Deckelkomponente kann im Wesentlichen normal zur Öffnungsebene der Fahrzeugkarosserie erfolgen. Zusätzlich besteht die Möglichkeit, dass die sich daran anschließende Verstellung der Deckelkomponente in die die Öffnung freigebende Stellung eine Drehbewegung der Deckelkomponente um die Drehachse des Steuerelementes umfasst.

Die Drehachse des Steuerelementes kann in Abhängigkeit des jeweils vorliegenden Anwendungsfalles in Fahrzeughoch-, Fahrzeugquer-, oder in Fahrzeuglängsrichtung verlaufen, um vorhandene Bauräume innerhalb der der Fahrzeugkarosserie mit geringem Aufwand zu nutzen und die Abdeckvorrichtung mit geringem Aufwand in bestehende Fahrzeugsysteme integrieren zu können.

Weitere Vorteile und vorteilhafte Ausführungsformen der Erfindung ergeben sich aus den Ansprüchen und den nachfolgend unter Bezugnahme auf die Zeichnungen prinzipmäßig beschriebenen Ausführungsbeispielen, wobei für bau- und/oder funktionsgleiche Bauteile die gleichen Bezugszeichen verwendet werden.

Es zeigt:
- Fig. 1: eine vereinfachte Seitenansicht eines Fahrzeuges mit einer ersten Ausführung einer Abdeckvorrichtung, die eine Deckelkomponente zum Verschließen und Freigeben einer Öffnung einer Fahrzeugkarosserie des Fahrzeuges aufweist;
- Fig. 2: eine vereinfachte Innenansicht der Abdeckvorrichtung gemäß Fig. 1 in einem Betriebszustand, in dem die Deckelkomponente die Öffnung verschließt;
- Fig. 3: eine Fig. 2 entsprechende Darstellung der Abdeckvorrichtung in einem Betriebszustand, in dem die Deckelkomponente die Öffnung freigibt;
- Fig. 4: eine schematisierte dreidimensionale Teildarstellung der Abdeckvorrichtung der Fig. 1 in einer Ansicht von oben in verschlossenem Zustand;
- Fig. 5: die Abdeckvorrichtung in einer der Fig. 4 entsprechenden Darstellung, wobei die Bauteile teilweise transparent ausgeführt sind;
- Fig. 6: eine der Fig. 4 entsprechende Darstellung der Abdeckvorrichtung, wobei die Deckelkomponente gegenüber einem angrenzenden Bereich der Fahrzeugkarosserie vertikal nach innen verstellt ist;
- Fig. 7: die Abdeckvorrichtung in dem in Fig. 6 dargestellten Betriebszustand, wobei Bauteile vereinzelt transparent dargestellt sind;
- Fig. 8: eine der Fig. 4 entsprechende Darstellung der Abdeckvorrichtung, wobei die Deckelkomponente sowohl vertikal als auch parallel zu dem angrenzenden Bereich der Fahrzeugkarosserie verstellt ist;
- Fig. 9: die Abdeckvorrichtung in dem in der Fig. 8 gezeigten Betriebszustand, wobei einige Bauteile transparent ausgeführt sind;
- Fig. 10: eine Ausführungsvariante zu der Ausführung nach Fig. 1 bis Fig. 9 in einer der Fig. 2 entsprechenden Darstellung;
- Fig. 11: eine vereinfachte dreidimensionale Darstellung einer weiteren Ausführungsform deiner Abdeckvorrichtung, die eine Deckelkomponente zum Verschließen und Freigeben einer Öffnung einer Fahrzeugkarosserie des Fahrzeuges aufweist, in einem ersten Betriebszustand der Abdeckvorrichtung, in dem die Öffnung durch die Deckelkomponente vollständig verschlossen ist;
- Fig. 12: die Abdeckvorrichtung gemäß Fig. 11 in einem Betriebszustand, in dem die Deckelkomponente durch eine senkrechte Hubbewegung in das Innere der Fahrzeugkarosserie von der Öffnung weg verstellt ist; und
- Fig. 13: die Abdeckvorrichtung gemäß Fig. 11 und Fig. 12 in einem Betriebszustand, in dem die Öffnung von der Deckelkomponente vollständig freigegeben ist.

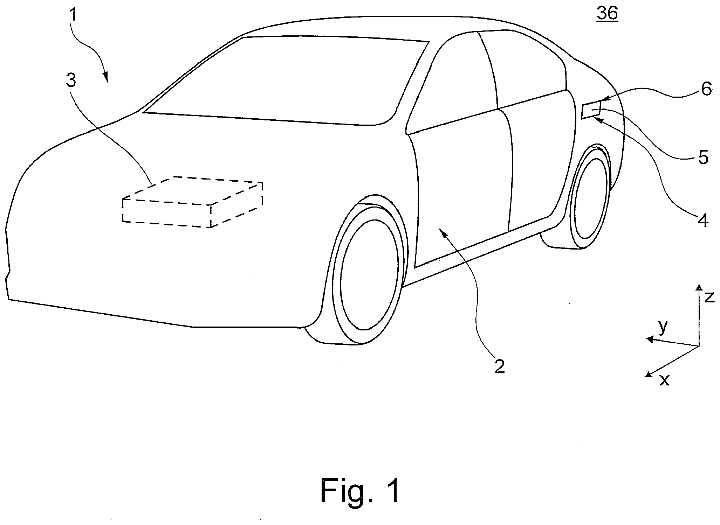

Fig. 1 zeigt ein Fahrzeug 1 mit einer Fahrzeugkarosserie 2 und einer Antriebseinheit 3, die wenigstens eine Brennkraftmaschine, wenigstens eine elektrische Maschine oder auch eine Kombination aus wenigstens einer Brennkraftmaschine und wenigstens einer elektrischen Maschine umfassen kann.

Vorliegend weist das Fahrzeug 1 heckseitig eine Abdeckvorrichtung 4 mit einer Deckelkomponente 5 auf, die zum Verschließen und Freigeben einer Öffnung 6 in der Fahrzeugkarosserie 2 vorgesehen ist. Die Öffnung 6 kann eine Tank- und/oder Lademulde sein. Durch die Öffnung 6 kann Kraftstoff für eine Brennkraftmaschine in einen Tank einfüllbar sein. Darüber hinaus kann es vorgesehen sein, dass durch die Öffnung 6 ein elektrisches Steckersystem mit einem entsprechenden Koppelelement, das innerhalb der Fahrzeugkarosserie bzw. unterhalb der Außenhaut des Fahrzeuges 1 angeordnet ist, in Wirkverbindung bringbar ist, um einen elektrischen Energiespeicher des Fahrzeuges 1 aufladen zu können. Die Deckelkomponente 5 stellt dann entweder eine sogenannte Tank- oder Ladeklappe dar, die im Wesentlichen als ein ebenes bzw. plattenartiges Element ausgeführt ist.

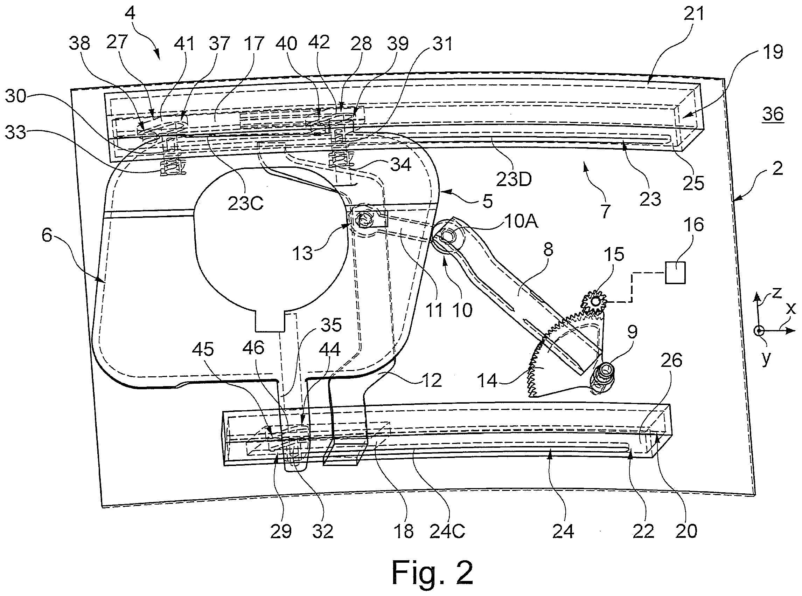

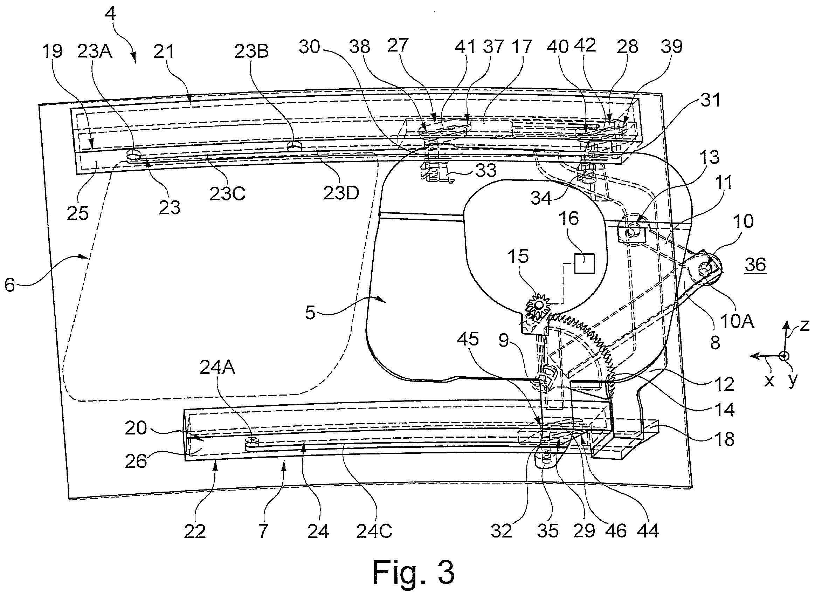

Die Fig. 2 und Fig. 3 zeigen jeweils eine Innenansicht eines Bereiches des Fahrzeuges 1, in dem die Abdeckvorrichtung 4 angeordnet ist. Dabei zeigt Fig. 2 die Abdeckvorrichtung 4 in einem Betriebszustand, in dem die Deckelkomponente 5 die Öffnung 6 der Fahrzeugkarosserie 2 vollständig verschließt. Im Unterschied dazu ist die Abdeckvorrichtung 4 in Fig. 3 in einem Betriebszustand gezeigt, in dem die Deckelkomponente 5 unter einen angrenzenden Bereich der Fahrzeugkarosserie 2 abgesenkt ist und die Öffnung 6 im Wesentlichen vollständig freigibt.

Zum Absenken der Deckelkomponente 5 vertikal in Richtung Fahrzeuginneres sowie zum Verschieben unter den angrenzenden Bereich der Fahrzeugkarosserie 2 ist ein Verlagerungsmechanismus mit einer an der Fahrzeugkarosserie angeordneten Kulissenführung 7 vorgesehen, an der die Deckelkomponente 5 zwangsgeführt ist. Zum Antrieb der Deckelkomponente 5 ist ein schwenkbares Steuerelement 8 bzw. ein Steuerhebel vorgesehen, der einenends um einen stationären bzw. karosseriefesten Drehpunkt 9 verschwenkbar ist und beabstandet hierzu bzw. anderenends einen Koppelbereich 10A mit einem Drehgelenk 10 aufweist, an dem ein weiteres, hebelförmiges Steuerelement 11 angelenkt ist, welches eine Antriebsverbindung zwischen der Deckelkomponente 5 und dem Steuerhebel 8 herstellt. Die beiden Steuerelemente bzw. Steuerhebel 8 und 11 stellen einen sogenannten Zweischlag dar.

Der Steuerhebel 8 ist drehfest mit einem Zahnsegment 14 verbunden, das mit dem Steuerhebel 8 um den Drehpunkt 9 verdreht werden kann. Das Zahnsegment 14 steht mit einem Zahnrad 15 in Eingriff, das von einem Antriebsmodul 16 rotatorisch antreibbar ist.

Das Antriebsmodul 16 umfasst hier einen Elektromotor, der in beide Drehrichtungen betreibbar ist. In Abhängigkeit des jeweils vorliegenden Anwendungsfalles besteht auch die Möglichkeit, dass das Antriebsmodul 16 mit einem Hydraulikmotor oder dergleichen ausgeführt ist. Zusätzlich besteht auch die Möglichkeit, den Steuerhebel 8 in geeigneter Art und Weise direkt hydraulisch zu betätigen.

Zur Umsetzung der Antriebsbewegung auf die Deckelkomponente 5 zwischen dem Zweischlag bestehend aus dem Steuerhebel 8 und dem weiteren Steuerhebel 11 ein Bügelelement 12 vorgesehen, welches mit dem weiteren Steuerhebel 11 über ein Drehgelenk 13 verbunden ist.

Das Bügelelement 12 steht vorliegend mit einem ersten, in der Zeichnung oberen Schlittenelement 17 und einem zweiten, unteren Schlittenelement 18 in Verbindung, welche wiederum mit der Deckelkomponente 5 verbunden sind und längsverschieblich in Innenräumen 19, 20 von Kulissenschienen 21, 22, die als Hohlprofile ausgebildet sind, angeordnet sind. In den Kulissenschienen 21, 22 werden die Schlittenelemente 17 und 18 somit entlang von karosseriefesten Steuerbahnen 23, 24 verstellt, die in Seitenflächen 25, 26 der Kulissenschienen 21, 22 ausgebildet sind.

Die Schlittenelemente 17, 18 stellen für sich ebenfalls Kulissenelemente dar, an denen die Deckelkomponente 5 verschiebbar gelagert ist. Hierzu umfasst das erste, obere Schlittenelement 17 zwei Steuerbahnen 27, 28, während das zweite, untere Schlittenelement 18 bei dem dargestellten Ausführungsbeispiel der Abdeckvorrichtung 4 nur mit einer Steuerbahn 29 ausgeführt ist, deren Verlauf den Verläufen der Steuerbahnen 27 und 28 des ersten Schlittenelements 17 entspricht.

Die Steuerbahn 27 des ersten Schlittenelements 17 und die Steuerbahn 23 der in der Zeichnung oberen Kulissenschiene 21 sind so aufeinander abgestimmt, dass ein fest an der Deckelkomponente 5 angebundenes bolzenartiges Gleitelement 30 gleichzeitig in die erste Steuerbahn 27 des ersten Schlittenelements 17 und in die Steuerbahn 23 der Kulissenschiene 21 eingreift. Zusätzlich greift ein zweites fest mit der Deckelkomponente 5 verbundenes bolzenartiges Gleitelement 31 gleichzeitig in die zweite Steuerbahn 28 des oberen Schlittenelementes 17 und in die Steuerbahn 23 der Kulissenschiene 21 ein.

Gleichzeitig greift die Deckelkomponente 5 über ein drittes bolzenartiges Gleitelement 32 in die Steuerbahn 29 des unteren Schlittenelementes 18 und die Steuerbahn 24 der unteren Kulissenschiene 22 ein. Die bolzenartigen Gleitelemente sind vorliegend über Koppelstege 33 bis 35 fest mit der Deckelkomponente 5 verbunden.

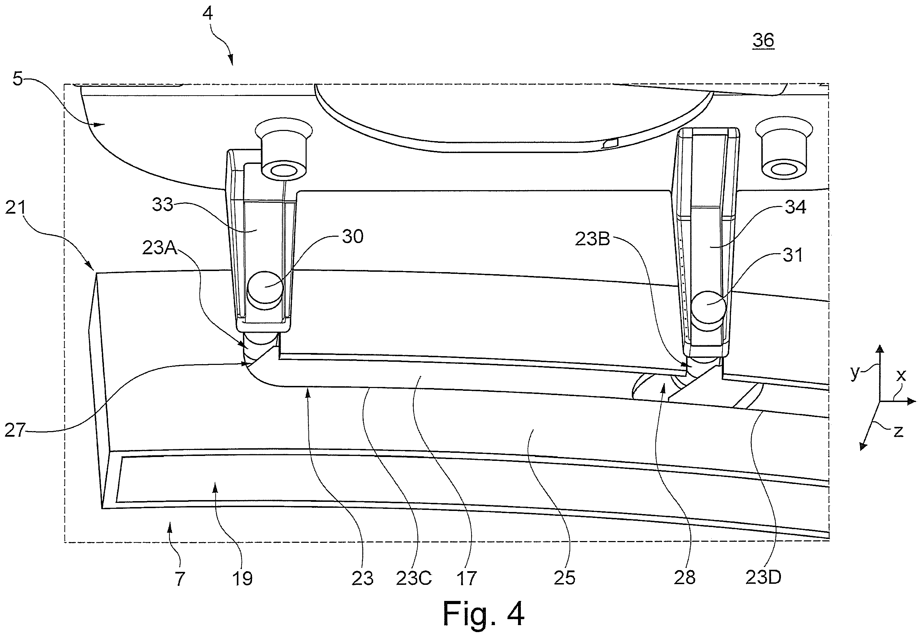

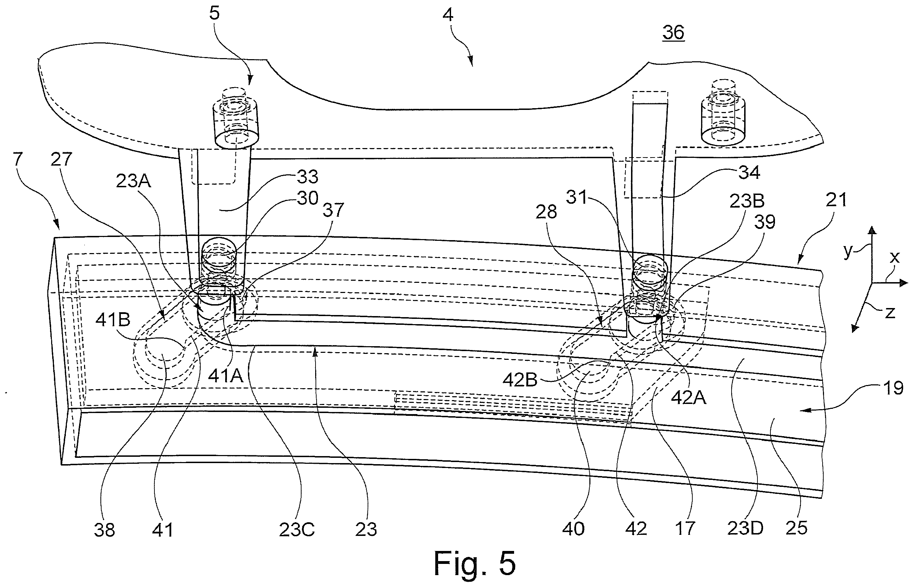

In Fig. 4 ist eine vereinfachte dreidimensionale Teildarstellung der Abdeckvorrichtung 4 gemäß Fig. 2 gezeigt, welche im Wesentlichen einer Unteransicht der ersten Kulissenschiene 21 entspricht. Zusätzlich zeigt Fig. 5 eine der Fig. 4 entsprechende Darstellung, wobei die erste Kulissenschiene 21 und das obere Schlittenelement 17 transparent dargestellt und mit gebrochenen Umrisslinien graphisch wiedergegeben sind.

In Fig. 2, Fig. 4 und Fig. 5 ist jeweils eine erste Endstellung der Deckelkomponente 5 gezeigt, welche einer Schließstellung entspricht, in der die Öffnung 6 der Fahrzeugkarosserie 2 von der Deckelkomponente 5 vollständig verschlossen ist.

In der Schließstellung sind die oberen Gleitelemente 30, 31 in Endbereichen 37, 38 der Steuerbahnen 27, 28 des oberen Schlittenelements 17 und das untere Gleitelement 32 in einem Endbereich 44 der Steuerbahn 29 des unteren Schlittenelements 18 angeordnet. Die Endbereiche 37 und 38 der Steuerbahnen 27 und 28 und der Endbereich 44 der Steuerbahn 29 stellen jeweils Rastbereiche für die bolzenartigen Gleitelemente 30, 31 bzw. 32 dar. Die Steuerbahnen 27 und 28 bzw. 29 sind anderenends mit weiteren Rastbereichen 39, 40 bzw. 45 ausgeführt. Zwischen den Rastbereichen 37 und 39 bzw. 38 und 40 bzw. 44 und 45 weisen die Steuerbahnen 27, 28 und 29 jeweils schräg verlaufende Abschnitte 41, 42 bzw. 46 auf.

Die Rastbereiche 37, 39 bzw. 38, 40 bzw. 44, 45 der Steuerbahnen 27, 28 und 29 sind dazu eingerichtet, einem Eintreten der Gleitelemente 30, 31 in die zwischen den Rastbereichen 37 und 39 bzw. 38 und 40 bzw. 44 und 45 verlaufenden Abschnitte 41 bzw. 42 bzw. 46 der Steuerbahnen 27, 28 oder 29 entgegenzuwirken.

Dabei verbleiben die Gleitelemente 30 bis 32 in den Rastbereichen 37 und 39 bzw. 38 und 40 bzw. 44 und 45, bis eine Schwenkbewegung des Steuerhebels 8 erfolgt, die die Gleitelemente 30, 31, 32 aus den Rastbereichen 37 oder 39 bzw. 38 oder 40 bzw. 44 oder 45 in die Abschnitte 41 oder 42 der Steuerbahnen 27 oder 28 oder in den Abschnitt 46 der Steuerbahn 29 überführt.

Hierfür umfassen die Rastbereiche 37, 39 bzw. 38, 40 bzw. 44, 45 jeweils Anlagebereiche 41A, 41B bzw. 42A, 42B, die mit seitlichen Begrenzungen der Abschnitte 41, 42 oder 46 jeweils einen Winkel einschließen. Die endseitigen Unstetigkeiten der Verläufe der Steuerbahnen 27 bis 29 zwischen den Abschnitten 41, 42 und 46 und den Rastbereichen 37, 38 bzw. 39, 40 bzw. 44, 45 verhindern das selbstständige Eintreten der Gleitelemente 30 bis 32 in die Abschnitte 41, 42 und 46.

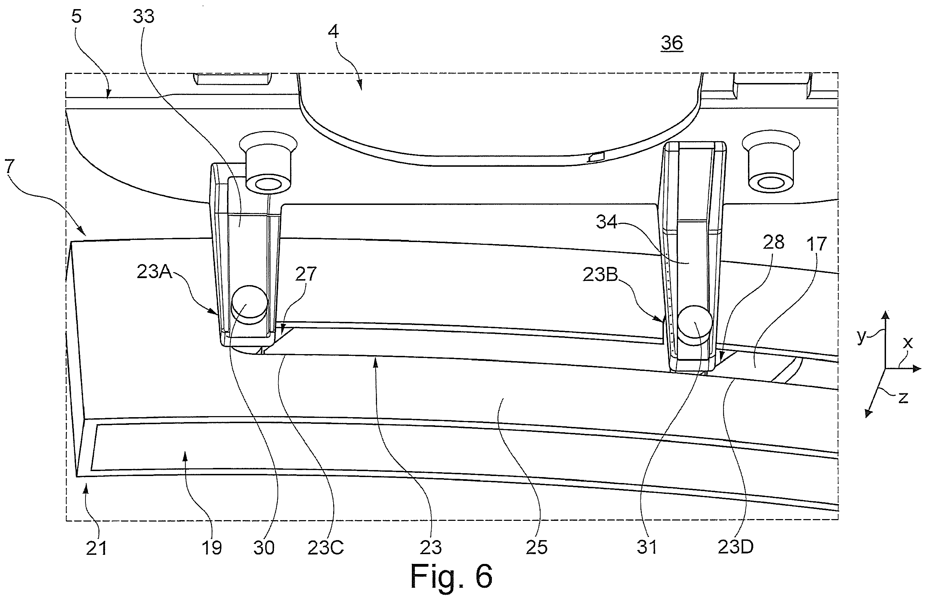

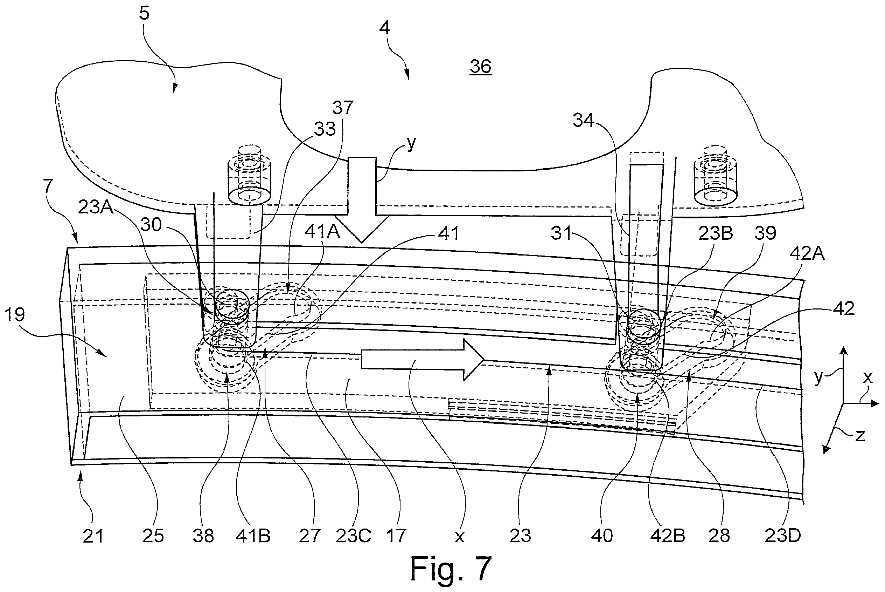

Liegt eine entsprechende Anforderung zum Freigeben der Öffnung 6 durch die Deckelkomponente 5 vor, wird der Steuerhebel 8 vom Antriebsmodul 16 ausgehend von der in Fig. 2 gezeigten Schwenkstellung in Richtung der in Fig. 3 gezeigten Schwenkstellung verschwenkt. Diese Schwenkbewegung erfolgt in einer Ebene, welche im Wesentlichen parallel zur angrenzenden Karosserieoberfläche liegt. Mit der Schwenkbewegung des Steuerhebels 8 erfolgt eine Verstellung der Schlittenelemente 17 und 18 an den Kulissenschienen 21 und 22 vorliegend in Fahrzeuglängsrichtung x. Die Stellbewegung der Schlittenelemente 17 und 18 löst zunächst eine Hubbewegung der Deckelkomponente 5 in Fahrzeugquerrichtung y bzw. senkrecht zur angrenzenden Karosserieoberfläche in Richtung Fahrzeuginneres aus. Während der Hubbewegung der Deckelkomponente 5 hebt diese folglich in der in Fig. 6 und Fig. 7 dargestellten Art und Weise im Wesentlichen vertikal nach innen von der Innenseite der Fahrzeugkarosserie 2 ab.

Um diese Hubbewegung der Deckelkomponente 5 darstellen zu können, umfassen die Steuerbahnen 23 und 24 der Kulissenschienen 21 und 22 jeweils erste Abschnitte 23A, 23B bzw. 24A, die in Fahrzeugquerrichtung y bzw. senkrecht zur Karosserieoberfläche verlaufen. Durch die Schwenkbewegung des Steuerhebels 8 und die daraus resultierende translatorische Verschiebung der Schlittenelemente 17 und 18 in den Kulissenschienen 21 und 22 werden die Gleitelemente 30 bis 32 aus den Rastbereichen 37 bzw. 38 bzw. 44 in die Abschnitte 41 bzw. 42 bzw. 46 der Steuerbahnen 27 bis 29 überführt. Da die Gleitelemente 30 und 31 zusätzlich in die ersten Abschnitte 23A, 23B der Steuerbahn 23 eingreifen und das Gleitelement 32 in den ersten Abschnitt 24A der Steuerbahn 24 vorkragt, wird die Deckelkomponente 5 nur fahrzeugeinwärts, d. h. hier in Fahrzeugquerrichtung y, verstellt. Dies ist der Fall, solange die Gleitelemente 30 bis 32 in den ersten Abschnitten 23A, 23B und 24A der Steuerbahnen 23 und 24 geführt sind.

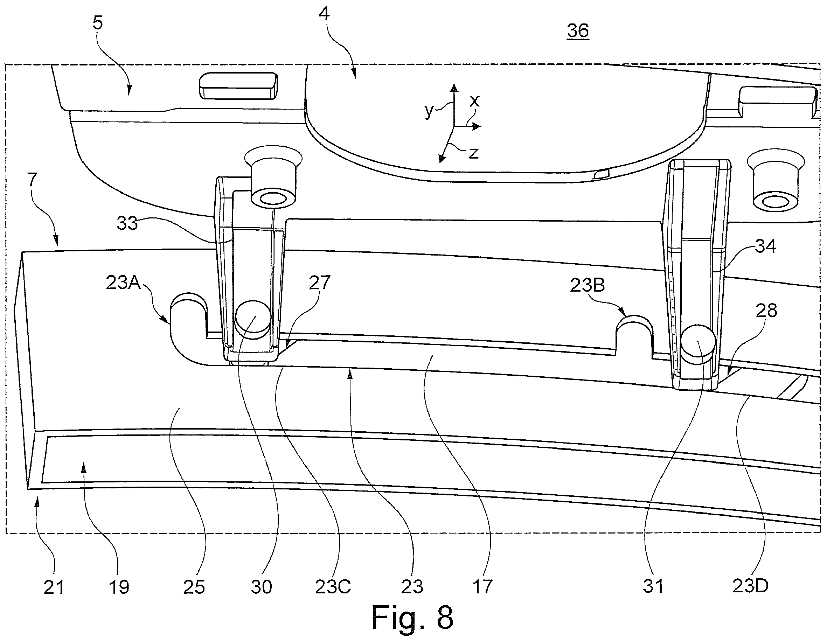

Die Hubbewegung der Deckelkomponente 5 in Richtung Fahrzeuginneres bzw. Fahrzeugquerrichtung y ist beendet, wenn die Gleitelemente 30 bis 32 aus den ersten Abschnitten 23A, 23B der Steuerbahn 23 und aus dem ersten Abschnitt 24A der Steuerbahn 24 austreten und in zweiten Abschnitten 23C, 23D bzw. 24C der Steuerbahnen 23 und 24 angeordnet sind. Dieser Betriebszustand der Abdeckvorrichtung 4 ist in Fig. 6 und Fig. 8 gezeigt.

Die zweiten Abschnitte 23C, 23D bzw. 24C schließen sich an die ersten Abschnitte 23A, 23B bzw. 24A der Steuerbahnen 23 bzw. 24 an und verlaufen im Wesentlichen parallel zur Karosserieoberfläche, vorliegend in Fahrzeuglängsrichtung x.

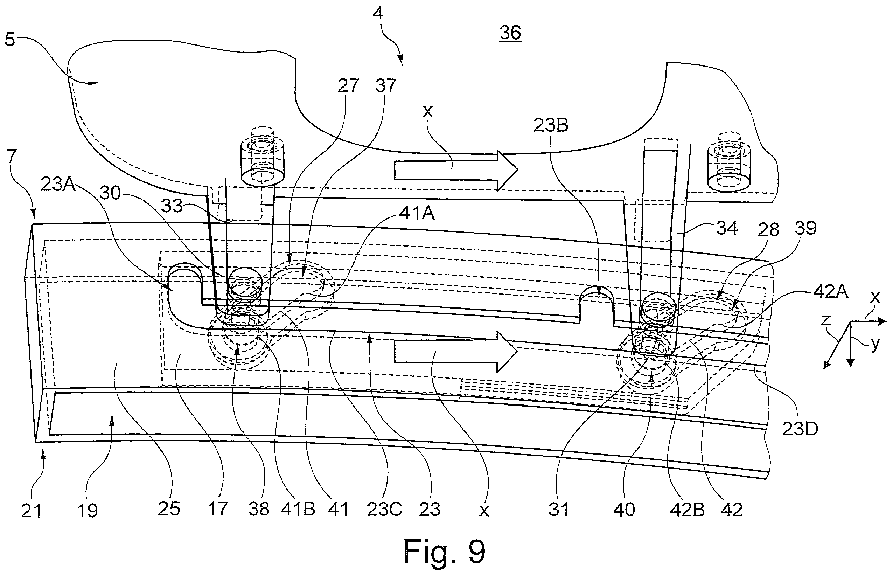

Diese Ausführung der Steuerbahnen 23 und 24 der Kulissenschienen 21, 22 bewirkt, dass die Schlittenelemente 17 und 18 in der in Fig. 8 und Fig. 9 dargestellten Art und Weise vom Steuerhebel 8 weiter translatorisch verstellt werden können. Die Verstellung der Schlittenelemente 17 und 18 in einer Querrichtung parallel zur Karosserieoberfläche wie hier in Fahrzeuglängsrichtung x bewirkt ebenfalls eine Verstellung der Deckelkomponente 5 in diese Richtung. Damit wird die Deckelkomponente 5 zunehmend aus dem Überdeckungsbereich mit der Öffnung 6 geführt, bis die Deckelkomponente 5 letztendlich die Öffnung 6 in der in Fig. 3 gezeigten Art und Weise freigibt.

Es ergibt sich somit eine Hubbewegung - und Verschiebebewegung der Deckelkomponente 5, welche an ihrer oberen Seite über die beiden Gleitelemente 30, 31 in den beiden Steuerbahnen 27 und 28 des oberen Schlittenelementes 17 eine Hubbewegung ausführt und mit dem Schlittenelement 17 in der Kulissenschiene 21, welche eine fahrzeugfeste Führungsschiene darstellt, längsverschieblich ist.

Auf ihrer gegenüberliegenden, in der Zeichnung unteren Seite ist die hier eine Lade- oder Tankklappe bildende Deckelkomponente 5 mit dem weiteren Schlittenelement 18 in der Kulissenschiene 22 zwangsgeführt. Die Kulissenschiene 22 kann als zweite fahrzeugfeste Führungsbahn angesehen werden, die parallel zur ersten fahrzeugfesten Führungsbahn verläuft.

Liegt eine entsprechende Anforderung zum Schließen der Öffnung 6 vor, wird der Steuerhebel 8 aus seiner zweiten Schwenkstellung in seine erste Schwenkstellung zurück verschwenkt. Dann wird die Deckelkomponente 5 in ihre Position zurückverstellt, in der sie von innen an der Fahrzeugkarosserie 2 anliegt und einen Teil von deren Oberfläche bildet sowie die Öffnung 6 gegenüber der Umgebung 36 des Fahrzeuges 1 dichtend verschließt.

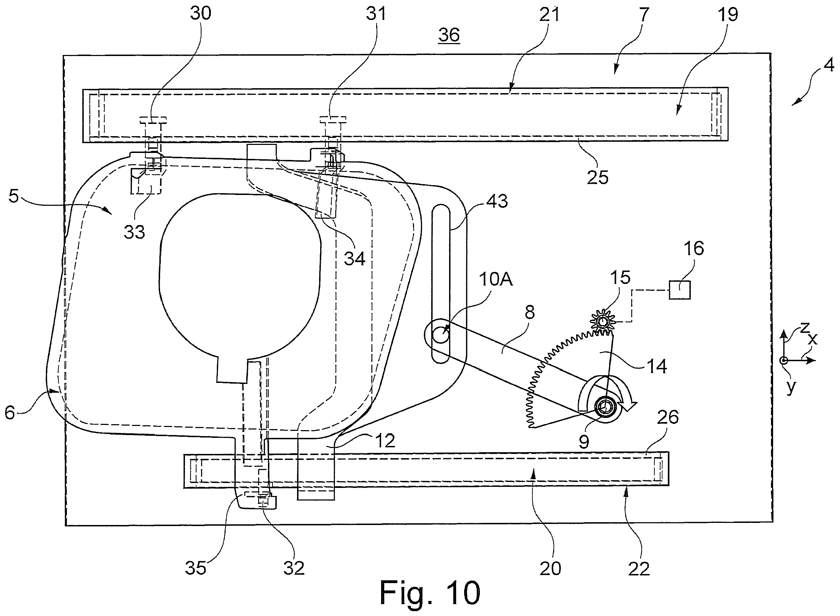

Fig. 10 zeigt eine Ausführungsvariante der Abdeckvorrichtung 4, deren konstruktiver Aufbau sowie deren Funktionsweise im Wesentlichen dem zu Fig. 2 bis Fig. 9 näher beschriebenen Ausführungsbeispiel entspricht. Aus diesem Grund wird bezüglich der Funktionsweise und des grundsätzlichen konstruktiven Aufbaus der Abdeckvorrichtung 4 gemäß Fig. 10 auf die vorstehende Beschreibung zu Fig. 2 bis Fig. 9 verwiesen.

Der wesentliche Unterschied der Abdeckvorrichtung 4 gemäß Fig. 10 gegenüber der zuvor beschriebenen Abdeckvorrichtung ist, dass die Abdeckvorrichtung 4 gemäß Fig. 10 ohne den weiteren Steuerhebel 11 ausgebildet ist. Der schwenkbare Steuerhebel 8 der Vorrichtung gemäß Fig. 10 greift mit seinem Koppelbereich 10A in ein Langloch 43 des Bügelelementes 12 ein. Damit löst die Schwenkbewegung des Steuerhebels 8 eine Verstellung des Bügelelementes 12 in eine Richtung parallel zur Erstreckung der Karosserieoberfläche, vorliegend in Fahrzeuglängsrichtung x aus, die die zu Fig. 2 bis Fig. 9 näher beschriebene Betätigung der Deckelkomponente 5 bewirkt.

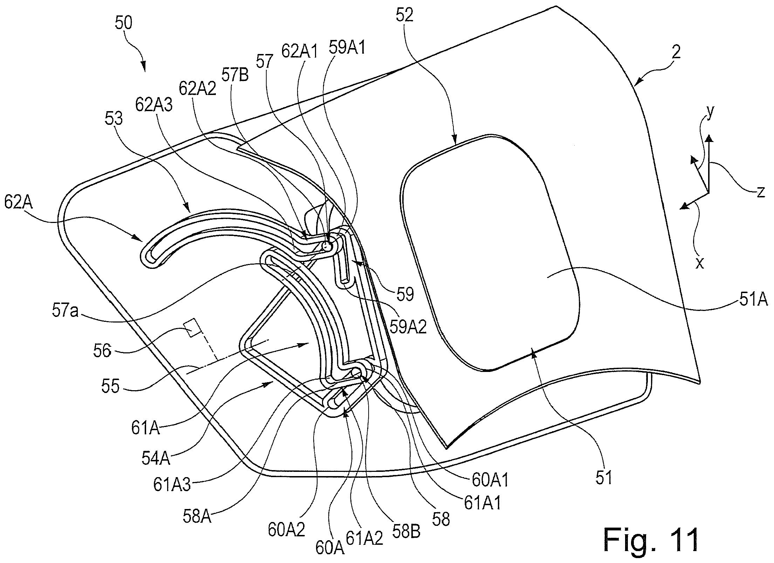

In Fig. 11 bis Fig. 13 ist eine weitere Ausführungsform der Abdeckvorrichtung 50 mit einer Deckelkomponente 51 dargestellt, die ebenfalls zum Verschließen und Freigeben einer Öffnung 52 in der Fahrzeugkarosserie 2 vorgesehen ist, wobei die Öffnung 52 eine Tank- und/oder Lademulde sein kann. Die Deckelkomponente 52 stellt dann entweder eine sogenannte Tank- oder Ladeklappe dar, die im Wesentlichen als ein ebenes bzw. plattenartiges Element ausgeführt ist.

Die in Fig. 11 bis Fig. 13 gezeigte Ausführungsform ist gegenüber den Ausführungen der Fig. 1 bis 10 hinsichtlich der benötigten Teilezahl nochmals reduziert. Das schwenkbare Steuerelement 54A bzw. 54B ersetzt hier gleichzeitig die Schlitten der zuvor beschriebenen Ausführungen und ist direkt antreibbar.

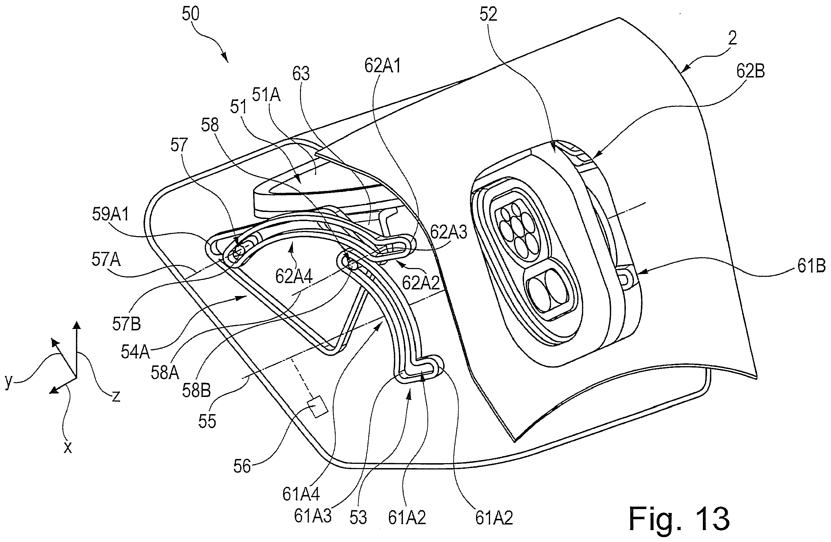

Fig. 11 zeigt die Abdeckvorrichtung 50 in einem Betriebszustand, in dem die Deckelkomponente 51 die Öffnung 52 der Fahrzeugkarosserie 2 vollständig verschließt. Im Unterschied dazu ist die Abdeckvorrichtung 50 in Fig. 13 in einem Betriebszustand gezeigt, in dem die Deckelkomponente 51 unter einen angrenzenden Bereich der Fahrzeugkarosserie 2 abgesenkt ist und die Öffnung 52 im Wesentlichen vollständig freigibt.

Zum Absenken der Deckelkomponente 51 vertikal in Richtung Fahrzeuginneres sowie zum Verschwenken unter den angrenzenden Bereich der Fahrzeugkarosserie 2 ist ein Verlagerungsmechanismus mit einem Kulissenführung 53 vorgesehen, an dem die Deckelkomponente 51 zwangsgeführt ist. Zum Antrieb der Deckelkomponente 51 sind vorliegend schwenkbare Steuerelemente 54A, 54B jeweils beidseits der Deckelkomponente 51 vorgesehen, die um eine stationäre bzw. karosseriefeste Drehachse 55 verschwenkbar sind und vorliegend beispielhaft als Steuerplatten ausgeführt sind.

Denkbar ist auch eine Ausführung mit nur auf einer Seite der Deckelkomponente angeordnetem schwenkbaren Steuerelement.

Die jeweils eine rotatorisch gelagerte, annähernd trapezförmige Steuerplatte bzw. einen Drehhebel darstellenden Steuerelemente 54A, 54B stehen in nicht näher dargestellter Art und Weise mit einem Antrieb 56 in Wirkverbindung, der die beiden Steuerelemente 54A in der nachfolgenden Art und Weise rotatorisch antreibt und dabei verstellt bzw. um die Drehachse 55 verschwenkt.

Der Antrieb 56 umfasst hier einen Elektromotor, der in beide Drehrichtungen betreibbar ist. In Abhängigkeit des jeweils vorliegenden Anwendungsfalles besteht auch die Möglichkeit, dass der Antrieb 56 mit einem Hydraulikmotor oder dergleichen ausgeführt ist. Zusätzlich besteht auch die Möglichkeit, die Steuerelemente 54A, 54B in geeigneter Art und Weise direkt hydraulisch zu betätigen.

Zur Umsetzung der Antriebsbewegung des Antriebs 56 auf die Deckelkomponente 51 ist ein Doppelkulissensystem vorgesehen, wobei die Deckelkomponente 51 mit damit fest verbundenen und vorliegend als bolzenartige Kulissenpins ausgeführten Gleitelementen 57, 58 in Steuerbahnen 59, 60A, 60B, 61A, 61B, 62A, 62B des Kulissenführungssystems 53 eingreift. Längsachsen 57A, 58A der Gleitelemente 57, 58 verlaufen parallel zur Drehachse 55. Die Gleitelemente 57, 58 stehen jeweils in der in Fig. 13 näher ersichtlichen Art und Weise über Bügelelemente 63 mit der Deckelkomponente 51 in Verbindung.

Dabei sind erste Steuerbahnen 59 und 60A bzw. 60B des Kulissenführungssystems 53 im jeweiligen rotatorischen Steuerelement 54A bzw. 54B ausgebildet. Die Steuerbahnen 59, 60A und 60B sind jeweils als Langlöcher bzw. Langlochbahnen ausgebildet und sind im vorliegenden Fall jeweils identisch, d. h. mit gleichen Verläufen und Abmessungen, in den beidseits der Ladeklappenkomponente 51 angeordneten schwenkbaren Steuerelementen 54A, 54B ausgeführt.

Die weiteren Steuerbahnen 61A, 61B sowie 62A, 62B sind jeweils karosseriefest ausgeführt und jeweils auf der dem Deckel 51 abgewandten Seite der schwenkbaren Steuerelemente 54A, 54B vorgesehen.

Die Steuerbahnen 59, 60A bzw.60B in dem schwenkbaren Steuerelement 54A bzw. 54B und die weiteren karosseriefesten Steuerbahnen 61A, 62A bzw. 61B, 62B sind so aufeinander abgestimmt, dass die Gleitelemente 57, 58 mit ihren freien Enden 57B, 58B jeweils die Steuerbahnen 59A, 60A bzw. 60B des verschwenkbaren Steuerelements durchgreifen und mit ihren freien Enden 57A, 58A zumindest in die weiteren karosseriefesten Steuerbahnen 61A, 61B, 62A, 61B eingreifen.

Das Steuerelement 54B und dessen Steuerbahnen 60B sowie die damit zusammenwirkenden weiteren Steuerbahnen 61B, 62B, deren Ausführung identisch ist mit der Ausführung des Steuerelementes 54A und der Steuerbahnen 59, 60A, 61A und 62A, sind in Fig. 11 bis Fig. 13 nur teilweise dargestellt. Aus diesem Grund wird in der nachfolgenden Beschreibung der Funktionsweise der Abdeckvorrichtung 50 im Wesentlichen lediglich auf das Steuerelement 54A und die Steuerbahnen 59, 60A sowie die weiteren Steuerbahnen 61A, 62A Bezug genommen.

In der Schließstellung der Deckelkomponente 51 sind die Gleitelemente 57, 58 jeweils in Endbereichen 59A1, 60A1 der Steuerbahnen 59, 60A und in Endbereichen 61A1, 62A1 der weiteren Steuerbahnen 61A, 62A angeordnet und werden von dem schwenkbaren Steuerelement 54A in diesen Eckbereichen des Steuerelements 54A gehalten. Dadurch wird ein unerwünschtes Freigeben der Öffnung 52 durch die Deckelkomponente 51 verhindert.

Liegt eine entsprechende Anforderung zum Freigeben der Öffnung 52 durch die Deckelkomponente 51 vor, wird das Steuerelemente 54A vom Antrieb 56 ausgehend von der in Fig. 11 gezeigten Schwenkstellung in Richtung der in Fig. 13 gezeigten Schwenkstellung verschwenkt. Diese Schwenkbewegung erfolgt in einer Fahrzeugquerebene, welche im Wesentlichen senkrecht zur angrenzenden Karosserieoberfläche angeordnet ist und von Fahrzeughochrichtung z und der Fahrzeugquerrichtung y aufgespannt ist. Mit der Schwenkbewegung des Steuerelements 54A erfolgt eine Verstellung der Gleitelemente 57, 58 in den Steuerbahnen 59, 60A des Steuerelements und in ersten Abschnitten 61A2, 62A2 der weiteren karosseriefesten Steuerbahnen 61A, 62A in Bezug auf die Außenseite der Fahrzeugkarosserie 2 nach innen. Diese Verstellung der Gleitelemente 57, 58 bewirkt eine Absenk-/Hubbewegung bzw. ein translatorisches Abheben der Deckelkomponente 51 von der Innenseite der Fahrzeugkarosserie 2 in Richtung des Fahrzeuginneren, womit eine Relativbewegung zwischen der Deckelkomponente 51 und der Innenseite der Fahrzeugkarosserie in tangentialer Richtung unterbleibt. Eine solche tangentiale Bewegung ist unerwünscht, da diese auf Dauer Beschädigungen im Anlagebereich zwischen der Deckelkomponente 51 und der Fahrzeugkarosserie 2 verursacht und beispielsweise eine Dichtwirkung einer in diesem Bereich vorgesehenen Dichteinheit beeinträchtigt.

Um diese Hubbewegung der Deckelkomponente 51 darstellen zu können, umfassen die weiteren karosseriefesten Steuerbahnen 61A, 62A jeweils die ersten Abschnitte 61A2, 62A2, die im Wesentlichen gerader in Fahrzeugquerrichtung y bzw. senkrecht zur Karosserieoberfläche verlaufen. Durch die Schwenkbewegung der Steuerelemente 54A, 54B und die daraus resultierende translatorische Verschiebung der Gleitelemente 57, 58 in den Steuerbahnen 59, 60A, 61A, 62A werden die Gleitelemente 57, 58 in Umlenkbereiche 61A3, 62A3 der weiteren Steuerbahnen 61A, 62A überführt. Dann ist die Hubbewegung der Deckelkomponente 51 in Richtung Fahrzeuginneres bzw. in Fahrzeugquerrichtung y beendet.

Die Gleitelemente 57, 58 liegen dann an weiteren Endbereichen 59A2, 60A2 der Steuerbahnen 59, 60A des schwenkbaren Steuerelements an. Des Weiteren treten die Gleitelemente 57, 58 aus den Umlenkbereichen 61A2, 62A2 der karosseriefesten Steuerbahnen 61A, 62A aus und werden in zweite Abschnitte 61A4, 62A4 der karosseriefesten Steuerbahnen 61A, 62A überführt, wenn das Steuerelement 54A weiter verschwenkt wird. Dieser Betriebszustand der Abdeckvorrichtung 50 ist in Fig. 13 gezeigt.

Die zweiten Abschnitte 61A4, 62A4 der weiteren, karosseriefesten Steuerbahnen 61A, 62A schließen sich an deren erste Abschnitte 61A1, 62A1 an und verlaufen im Wesentlichen vorliegend in Fahrzeugquerrichtung y mit einer Krümmung. Die Krümmungen der zweiten Abschnitte 61A4, 62A4 der karosseriefesten Steuerbahnen 61A, 62A entsprechen jeweils den Krümmungen von Kreisen, deren Mittelpunkte jeweils auf der Drehachse 55 liegen.

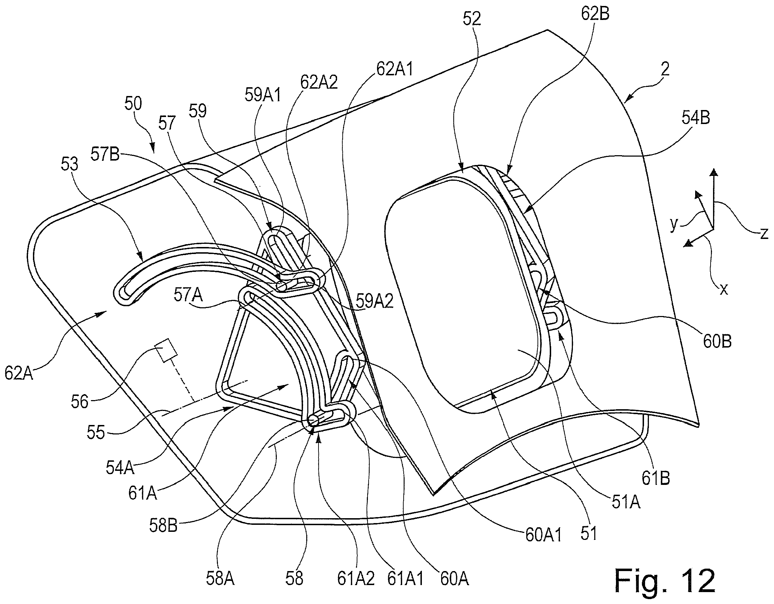

Diese Ausführung der Steuerbahnen 59, 60A in dem schwenkbaren Steuerelement sowie der karosseriefesten Steuerbahnen 61A, 62A bewirkt, dass die Deckelkomponente 51 aus der in Fig. 12 gezeigten Stellung, in der die Außenseite der Deckelkomponente 51 noch einen Verlauf aufweist, der parallel zur Außenseite der Fahrzeugkarosserie 2 ist, in die in Fig. 13 gezeigte verschwenkte Stellung wie ein Schwingtor verstellt wird und die Öffnung 52 vollständig frei gibt. In der in Fig. 13 gezeigten Stellung der Deckelkomponente 51 ist die Außenseite 51A der Deckelkomponente 51 im Wesentlichen horizontal ausgerichtet und weist in Fahrzeughochrichtung z nach oben. Es ergibt sich somit eine normale Hubbewegung und eine seitliche Verschwenk- bzw. Schwingbewegung der Deckelkomponente 51.

Liegt eine entsprechende Anforderung zum Schließen der Öffnung 52 vor, werden die Steuerelemente 54A, 54B aus ihrer zweiten Schwenkstellung in ihre erste Schwenkstellung zurück verschwenkt. Dann wird die Deckelkomponente 51 in ihre Position zurückverstellt, in der sie von innen an der Fahrzeugkarosserie 2 anliegt und einen Teil von deren Oberfläche bildet sowie die Öffnung 52 gegenüber der Umgebung 36 des Fahrzeuges 1 dichtend verschließt.

Es versteht sich, dass die beschriebenen Verläufe der Steuerbahnen des Kulissenführungssystems vom Fachmann je nach Form des schwenbaren Steuerelements und Platzierung der Gleitelemente an der Deckelkomponente variieren können, womit eine langlochartige Steuerbahn auch einen gewinkelten, abgeknickten, mäanderförmige oder sonstigen Verlauf aufweisen kann.

## Patentansprüche

1. Abdeckvorrichtung (4; 50), insbesondere Ladeklappenvorrichtung, mit einer Deckelkomponente (5; 51) und einem Verlagerungsmechanismus für die Deckelkomponente (4; 51) zum Verschließen und Freigeben einer Öffnung (6; 52) in einer Fahrzeugkarosserie (2), wobei die Deckelkomponente (5; 51) unter einen angrenzenden Bereich der Fahrzeugkarosserie (2) absenkbar ist, mit einem Kulissenführungssystem (7; 53), über das die Deckelkomponente (5; 51) zwischen einer die Öffnung (6; 52) verschließenden Stellung und einer die Öffnung (6; 52) freigebenden Stellung verstellbar geführt ist,
**dadurch gekennzeichnet,**
**dass** zumindest ein um einen Drehpunkt (9; 55) verschwenkbares Steuerelement (8; 54A, 54B) vorgesehen ist, das in einem von dem Drehpunkt (9; 55) beabstandeten Koppelbereich (10A; 59, 60A, 60B) mit der Deckelkomponente (5; 51) in Wirkverbindung steht, wobei die Deckelkomponente (5; 51) während einer Verschwenkung des Steuerelements (8; 54A, 54B) in Richtung einer Position, die der freigebenden Stellung der Deckelkomponente (5; 51) entspricht, und während einer weiteren Verschwenkung des Steuerelements (8; 54A, 54B) in Richtung einer Position, die der verschließenden Stellung der Deckelkomponente (5; 51) entspricht, verstellt wird.

2. Abdeckvorrichtung nach Anspruch 1,
**dadurch gekennzeichnet, dass** das Kulissenführungssystem (7; 53) Steuerbahnen (23, 24, 27 bis 29; 59, 60A, 60B, 61A, 61B, 62A, 62B) aufweist, die dazu eingerichtet sind, die Deckelkomponente (5; 51) während einer Schwenkbewegung des Steuerelements (8; 54A, 54B) ausgehend von seiner Position, die der schließenden Stellung der Deckelkomponente (5; 51) entspricht, in Richtung seiner Position, die der freigebenden Stellung der Deckelkomponente (5; 51) entspricht, zuerst in Richtung Fahrzeuginneres vorzugsweise vertikal normal aus einer Anlageposition abzusenken und anschließend unter den angrenzenden Bereich der Fahrzeugkarosserie (2) zu verlagern.

3. Abdeckvorrichtung nach Anspruch 2,
**dadurch gekennzeichnet, dass** erste Steuerbahnen (59, 60A, 60B) des Kulissenführungssystems (53) in dem Steuerelement (54A, 54B) vorzugsweise in Form langlochartiger Lochbahnen vorgesehen sind, und dass die weiteren Steuerbahnen (61A, 61B, 62A, 62B) karosseriefest vorzugsweise als langlochartiger Lochbahnen ausgebildet sind.

4. Abdeckvorrichtung nach Anspruch 3,
**dadurch gekennzeichnet, dass** die Deckelkomponente (51) an einer dem jeweiligen Steuerelement (54A, 54B) zugewandten Seite mit vorzugsweise zwei fest hieran angeordneten Gleitelementen (57, 58) ausgebildet ist, die bei einer Schwenkbewegung des Steuerelements (54A, 54B) in den Steuerbahnen (59, 60A, 60B, 61A, 61B, 62A, 62B) bewegt werden.

5. Abdeckvorrichtung nach einem der vorhergehenden Ansprüche,
**dadurch gekennzeichnet, dass** jeweils ein Verlauf der Steuerbahnen (59, 60A, 60B) im Steuerelement (54A, 54B) und Verläufe von Abschnitten (61A2, 62A2) der weiteren Steuerbahnen (61A, 61B, 62A, 62B) winkelig zueinander verlaufen, so dass bei Verschwenkung des Steuerelements (54A, 54B) zu Beginn einer Öffnungsbewegung zunächst die Absenkbewegung der Deckelkomponente (51) erfolgt.

6. Abdeckvorrichtung nach einem der vorhergehenden Ansprüche,
**dadurch gekennzeichnet, dass** sich die Abschnitte (61A2, 62A2) der weiteren Steuerbahnen (61A, 61B, 62A, 62B) im Wesentlichen in Richtung der Hubbewegung der Deckelkomponente (51) von der Öffnung (52) weg erstrecken.

7. Abdeckvorrichtung nach einem der vorhergehenden Ansprüche,
**dadurch gekennzeichnet, dass** sich an die Abschnitte (61A2, 62A2) der weiteren Steuerbahnen (61A, 61B, 62A, 62B) jeweils weitere Abschnitte (61A4, 62A4) der weiteren Steuerbahnen (61A, 61B, 62A, 62B) anschließen, deren Verläufe jeweils winkelig zu den Verläufen der Abschnitte (61A2, 62A2) der weiteren Steuerbahnen (61A, 61B, 62A, 62B) verlaufend ausgerichtet sind, so dass aus einer Schwenkbewegung des Steuerelements (54A, 54B) in Richtung seiner zweiten Schwenkstellung die Stellbewegung der Deckelkomponente (51) unter den angrenzenden Bereich der Fahrzeugkarosserie (2) resultiert.

8. Abdeckvorrichtung nach einem der vorhergehenden Ansprüche,
**dadurch gekennzeichnet, dass** das Steuerelement (54A, 54B) als Steuerplatte ausgeführt ist, welche insbesondere trapezartig mit den Steuerbahnen (60A, 60B) an zwei angrenzenden Seiten ausgeführt ist.

9. Abdeckvorrichtung nach einem der vorhergehenden Ansprüche,
**dadurch gekennzeichnet, dass** die weiteren Abschnitte (61A4, 62A4) der weiteren Steuerbahnen (61A, 61B, 62A, 62B) kreisbogenförmig ausgeführt sind und jeweils Kreislinien von Kreisen entsprechen, deren Mittelpunkte auf der Drehachse (55) des Steuerelementes (54A, 54B) liegen.

10. Abdeckvorrichtung nach einem der vorhergehenden Ansprüche,
**dadurch gekennzeichnet, dass** eine Antriebsachse des Antriebs (56) der Deckelkomponente (51) um die Drehachse (55) und die Drehachse (55) normal auf der derselben Kinematikebene des Steuerelementes (54A, 54B) stehen.

11. Abdeckvorrichtung nach einem der vorhergehenden Ansprüche,
**dadurch gekennzeichnet, dass** die Gleitelemente (57, 58) als zylindrische Bolzen ausgeführt sind, deren Längsachsen (57A, 58A) parallel zur Drehachse (55) des Steuerelementes (54A, 54B) verlaufen und mit ihren freien Enden (57B, 58B) sowohl in den Steuerbahnen (59, 60A, 60B) des schwenkbaren Steuerelements (54A, 54B) als auch in den weiteren Steuerbahnen (61A, 61B, 62A, 62B) geführt sind und dabei die Steuerbahnen (59, 60A, 60B) des Steuerelements (54A, 54B) durchgreifen und in die weiteren Steuerbahnen (61A, 61B, 62A, 62B) zumindest eingreifen oder umgekehrt die weiteren Steuerbahnen durchgreifen und in die Steuerbahnen des Steuerelements zumindest eingreifen.

12. Abdeckvorrichtung nach einem der vorhergehenden Ansprüche,
**dadurch gekennzeichnet, dass** die weiteren Steuerbahnen (61A, 61B, 62A, 62B) auf der Seite (54A1, 54B1) des Steuerelementes (54A, 54B) vorgesehen sind, die der Deckelkomponente (51) abgewandt oder die der Deckelkomponente (51) zugewandt ist.

13. Abdeckvorrichtung nach einem der Ansprüche 1 bis 12,
**dadurch gekennzeichnet, dass** der Drehpunkt (9; 55) des verschwenkbaren Steuerelements (8; 54A, 54B) stationär ist.

14. Fahrzeug (1) mit einer Abdeckvorrichtung (5; 50) gemäß einem der Ansprüche 1 bis 13.

15. Fahrzeug nach Anspruch 14,
**dadurch gekennzeichnet, dass** die vertikale Hubbewegung der Deckelkomponente (51) im Wesentlichen normal zur Öffnungsebene der Fahrzeugkarosserie (2) erfolgt und die sich daran anschließende Verstellung der Deckelkomponente (51) in die die Öffnung (52) freigebende Stellung eine Drehbewegung der Deckelkomponente (51) um die Drehachse (55) des Steuerelementes (54A, 54B) umfasst.

## Claims

1. Covering device (4; 50), in particular charging flap device, having a cover component (5; 51) and a displacement mechanism for the cover component (4; 51) for closing and releasing an opening (6; 52) in a vehicle body (2), wherein the cover component (5; 51) can be lowered under an adjacent region of the vehicle body (2); 51) can be lowered below an adjacent region of the vehicle body (2), having a rail guide system (7; 53) by means of which the cover component (5; 51) is guided moveable between a position closing the opening (6; 52) and a position releasing the opening (6; 52),
**characterized in that**
at least one control element (8; 54A, 54B) is provided which can be pivoted about a pivot point (9; 55) and is operatively connected to the cover component (5; 51) in a coupling region (10A; 59, 60A, 60B) spaced apart from the pivot point (9; 55), wherein the cover component (5; 51) is moved during pivoting of the control element (8; 54A, 54B) in the direction of a position corresponding to the releasing position of the cover component (5; 51) and during a further pivoting of the control element (8; 54A, 54B) in the direction of a position corresponding to the closing position of the cover component (5; 51).

2. Covering device according to claim 1,
**characterized in that** the rail guide system (7; 53) has control paths (23, 24, 27 to 29; 59, 60A, 60B, 61A, 61B, 62A, 62B) which are set up to move the cover component (5; 51) first from a contact position, preferably vertically normally in the direction of the interior of the vehicle and then under the adjacent region of the vehicle body (2), during a pivoting movement of the control element (8; 54A, 54B) starting from its position which corresponds to the closing position of the cover component (5; 51) in the direction of its position which corresponds to the releasing position of the cover component (5; 51).

3. Covering device according to claim 2,
**characterized in that** first control paths (59, 60A, 60B) of the rail guide system (53) are provided in the control element (54A, 54B) as hole tracks, preferably designed like a long hole, and **in that** the further control paths (61A, 61B, 62A, 62B) are fixed to the body, preferably designed as long hole-like hole tracks.

4. Covering device according to claim 3,
**characterized in that** the cover component (51) is formed on a side facing the respective control element (54A, 54B) with preferably two sliding elements (57, 58) which are fixedly arranged thereon and which are moved in the control paths (59, 60A, 60B, 61A, 61B, 62A, 62B) upon a pivoting movement of the control element (54A, 54B).

5. Covering device according to one of the preceding claims,
**characterized in that** a respective course of the control paths (59, 60A, 60B) in the control element (54A, 54B) and courses of sections (61A2, 62A2) of the further control paths (61A, 61B, 62A, 62B) extend at an angle to one another, so that when the control element (54A, 54B) is pivoted at the beginning of an opening movement, the lowering movement of the cover component (51) first takes place.

6. Covering device according to any one of the preceding claims,
**characterized in that** the sections (61A2, 62A2) of the further control paths (61A, 61 B, 62A, 62B) extend away from the opening (52), substantially in the direction of the lifting movement of the cover component (51).

7. Covering device according to one of the preceding claims,
**characterized in that** the sections (61A2, 62A2) of the further control paths (61A, 61B, 62A, 62B) are each adjoined by further sections (61A4, 62A4) of the further control paths (61A, 61B, 62A, 62B), the paths of which are each oriented at an angle to the paths of the sections (61A2, 62A2) of the further control paths (61A, 61B, 62A, 62B), so that a pivoting movement of the control element (54A, 54B) in the direction of its second pivoting position results in the movement of the cover component (51) under the adjacent region of the vehicle body (2).

8. Covering device according to one of the preceding claims,
**characterized in that** the control element (54A, 54B) is designed as a control plate which is designed in particular in a trapezoidal manner with the control paths (60A, 60B) on two adjacent sides.

9. Covering device according to any one of the preceding claims,
**characterized in that** the further sections (61A4, 62A4) of the further control paths (61A, 61B, 62A, 62B) are shaped in the form of a circular arc and correspond respectively to circular lines of circles whose centres lie on the axis of rotation (55) of the control member (54A, 54B).

10. Covering device according to any one of the preceding claims,
**characterized in that** a drive axis of the drive (56) of the cover component (51) about the rotation axis (55) and the rotation axis (55) are normal to the same kinematic plane of the control element (54A, 54B).

11. Covering device according to one of the preceding claims,
**characterized in that** the sliding elements (57, 58) are designed as cylindrical pins whose longitudinal axes (57A, 58A) extend parallel to the axis of rotation (55) of the control element (54A, 54B) and are guided with their free ends (57B, 58B) both in the control tracks (59, 60A, 60B) of the pivotable control element (54A, 54B) as well as in the further control paths (61A, 61B, 62A, 62B) and in so doing engage through the control paths (59, 60A, 60B) of the control element (54A, 54B) and at least engage in the further control paths (61A, 61B, 62A, 62B) or conversely engage through the further control paths and at least engage in the control paths of the control element.

12. Covering device according to any one of the preceding claims,
**characterized in that** the further control paths (61A, 61B, 62A, 62B) are provided on the side (54A1, 54B1) of the control element (54A, 54B) facing away from the cover component (51) or facing the cover component (51).

13. Covering device according to any one of claims 1 to 12,
**characterized in that** the pivot point (9; 55) of the pivotable control element (8; 54A, 54B) is stationary.

14. Vehicle (1) with a covering device (5; 50) according to any one of claims 1 to 13.

15. Vehicle according to claim 14,
**characterized in that** the vertical lifting movement of the cover component (51) is substantially normal to the opening plane of the vehicle body (2), and the subsequent displacement of the cover component (51) into the position releasing the opening (52) contains a rotary movement of the cover component (51) movement of the cover component (51) about the axis of rotation (55) of the control element (54A, 54B).

## Revendications

1. Dispositif de couverture (4; 50), en particulier dispositif de volet de chargement, avec un composant de couvercle (5; 51) et un mécanisme de déplacement pour le composant de couvercle (4; 51) pour fermer et libérer une ouverture (6; 52) dans une carrosserie de véhicule (2), le composant de couvercle (5; 51) peut être abaissé sous une zone adjacente de la carrosserie de véhicule (2), avec un système de guidage de coulisse (7; 53), par lequel le composant de couvercle (5; 51) est guidé desplacable entre une position fermant l'ouverture (6; 52) et une position libérant l'ouverture (6; 52),
**caractérisé en ce que**
il est prévu au moins un élément de commande (8; 54A, 54B) pouvant pivoter autour d'un point de rotation (9; 55), qui est fonctionnellment relié au composant de couvercle (5; 51) dans une zone de couplage (10A; 59, 60A, 60B) espacée du point de rotation (9; 55), le composant de couvercle (5; 51) est déplacé lors du pivotement de l'élément de commande (8; 54A, 54B) en direction d'une position qui correspond à la position de libération du composant de couvercle (5; 51), et pendant un autre pivotement de l'élément de commande (8; 54A, 54B) en direction d'une position qui correspond à la position de fermeture du composant de couvercle (5; 51).

2. Dispositif de couverture selon la revendication 1,
**caractérisé en ce que** le système de guidage de coulisse (7; 53) comporte des voies de commande (23, 24, 27 à 29; 59, 60A, 60B, 61A, 61B, 62A, 62B) qui sont configurées pour déplacer le composant de couvercle (5; 51) d'abord à partir d'une position de contact, de préférence verticalement, normalement en direction de l'intérieur du véhicule, puis sous la zone adjacente de la carrosserie du véhicule (2), lors du pivotement de l'élément de commande (8; 54A, 54B) à partir de sa position qui correspond à la position de fermeture de le composant de couvercle (5; 51) en direction de sa position qui correspond à la position d'ouverture le composant de couvercle (5; 51).

3. Dispositif de couverture selon la revendication 2,
**caractérisé en ce que** des premières voies de commande (59, 60A, 60B) du système de guidage de coulisse (53) sont intégrées dans l'élément de commande (54A, 54B) de manière à former une piste à trous, de préférence conçues comme un long trou, et les autres voies de commande (61A, 61B, 62A, 62B) sont fixées au carrosserie, de préférence conçues comme des pistes à trous longs.

4. Dispositif de couverture selon la revendication 3,
**caractérisé en ce que** le composant de couvercle (51) est formé sur un côté tourné vers l'élément de commande respectif (54A, 54B) avec de préférence deux éléments coulissants (57, 58) disposés de manière fixe sur celui-ci, qui sont déplacés dans les voies de commande (59, 60A, 60B, 61A, 61B, 62A, 62B) lors d'un mouvement pivotant de l'élément de commande (54A, 54B).

5. Dispositif de couverture selon l'une des revendications précédentes,
**caractérisé en ce que** un parcour respectif des voies de commande (59, 60A, 60B) dans l'élément de commande (54A, 54B) et des parcours de sections (61A2, 62A2) des autres voies de commande (61A, 61B, 62A, 62B) s'étendent de manière angulaire les uns par rapport aux autres, de sorte que lors du pivotement de l'élément de commande (54A, 54B) au début d'un mouvement d'ouverture, le mouvement d'abaissement du composant de couvercle (51) a d'abord lieu.

6. Dispositif de couverture selon l'une quelconque des revendications précédentes,
**caractérisé en ce que** les sections (61A2, 62A2) des autres voies de commande (61A, 61 B, 62A, 62B) s'étendent sensiblement dans la direction du mouvement de levage du composant de couvercle (51) en s'éloignant de l'ouverture (52).

7. Dispositif de couverture selon l'une des revendications précédentes,
**caractérisé en ce que** les sections (61A2, 62A2) des autres voies de commande (61A, 61B, 62A, 62B) sont respectivement suivis d'autres sections (61A4, 62A4) des autres voies de commande (61A, 61B, 62A, 62B), dont les parcours sont chacune orientées en biais par rapport aux parcours des sections (61A2, 62A2) des autres voies de commande (61A, 61B, 62A, 62B), de sorte qu'un mouvement de pivotement de l'élément de commande (54A, 54B) dans la direction de sa deuxième position de pivotement entraîne le mouvement du composant de couvercle (51) sous la zone adjacente de la carrosserie du véhicule (2).

8. Dispositif de couverture selon l'une quelconque des revendications précédentes,
**caractérisé en ce que** l'élément de commande (54A, 54B) est réalisé sous la forme d'une plaque de commande, qui est notamment trapézoïdale avec les voies de commande (60A, 60B) sur deux côtés adjacents.

9. Dispositif de couverture selon l'une quelconque des revendications précédentes,
**caractérisé en ce que** les autres sections (61A4, 62A4) des autres voies de commande (61A, 61B, 62A, 62B) sont conçus sous la forme d'un arc de cercle et correspondent respectivement à des lignes circulaires de cercles dont les centres sont situés sur l'axe de rotation (55) de l'élément de commande (54A, 54B).

10. Dispositif de couverture selon l'une des revendications précédentes,
**caractérisé en ce qu'**un axe d'entraînement de l'entraînement (56) du composant de couvercle (51) autour de l'axe de rotation (55) et l'axe de rotation (55) sont normaux sur le même plan cinématique de l'élément de commande (54A, 54B).

11. Dispositif de couverture selon l'une des revendications précédentes,
**caractérisé en ce que** les éléments coulissants (57, 58) sont conçus comme des goupilles cylindriques dont les axes longitudinaux (57A, 58A) sont parallèles à l'axe de rotation (55) de l'élément de commande (54A, 54B) et sont guidés avec leurs extrémités libres (57B, 58B) à la fois dans les voies de commande (59, 60A, 60B) de l'élément de commande pivotant (54A, 54B) que dans les autres voies de commande (61A, 61B, 62A, 62B) et s'engagent ainsi dans les voies de commande (59, 60A, 60B) de l'élément de commande (54A, 54B) et s'engagent au moins dans les autres voies de commande (61A, 61B, 62A, 62B) ou inversement s'engagent dans les autres voies de commande et s'engagent au moins dans les voies de commande de l'élément de commande.

12. Dispositif de couverture selon l'une quelconque des revendications précédentes,
**caractérisé en ce que** les autres voies de commande (61A, 6113, 62A, 6213) sont prévues sur le côté (54A1, 54131) de l'élément de commande (54A, 5413) qui est opposé au composant de couvercle (51) ou qui est tourné vers le composant de couvercle (51).

13. Dispositif de couverture selon l'une quelconque des revendications 1 à 12,
**caractérisé en ce que** le point de pivot (9 ; 55) de l'élément de commande pivotant (8; 54A, 5413) est fixe.

14. Véhicule (1) comprenant un dispositif de couverture (5; 50) selon l'une quelconque des revendications 1 à 13.

15. Véhicule selon la revendication 14,
**caractérisé en ce que** le mouvement de levage vertical du le composant de couvercle (51) est essentiellement perpendiculaire au plan d'ouverture de la carrosserie du véhicule (2) et le déplacement du composant de couvercle (51) qui s'ensuit dans la position libérant l'ouverture (52) comprend un mouvement de rotation du composant de couvercle (51) autour de l'axe de rotation (55) de l'élément de commande (54A, 5413).
